# EUROPÄISCHE PATENTSCHRIFT

(11) **EP 1 816 939 B1**
(45) Veröffentlichungstag und Bekanntmachung des Hinweises auf die Patenterteilung: **22.09.2010**
(21) Anmeldenummer: 05801689.0
(22) Anmeldetag: 31.10.2005
(51) Int. Cl.: A47J 37/08

(54) **BROTRÖSTER MIT BRÖTCHENAUFSATZ**
BREAD TOASTER COMPRISING AN ATTACHMENT FOR BUNS
GRILLE-PAIN AVEC DISPOSITIF POUR PETITS PAINS

(30) Priorität: 23.11.2004 DE 102004056500
(43) Veröffentlichungstag der Anmeldung: 15.08.2007
(73) Patentinhaber: BSH Bosch und Siemens Hausgeräte GmbH, 81739 München (DE)
(72) Erfinder: KRAMER, Siegmund, 83417 Kirchanschöring (DE); MEYER, Brigitte, 83339 Chieming (DE)
(86) Internationale Anmeldenummer: PCT/EP2005/055660
(87) Internationale Veröffentlichungsnummer: WO 2006/056523

(56) Entgegenhaltungen:
- EP-A- 1 199 017
- DE-A1- 3 443 544
- DE-C1- 3 603 848
- DE-U1- 8 103 638

## Beschreibung

Die Erfindung betrifft einen Brotröster mit einem in einem Gehäuse angeordneten Röstraum und einem über einer Öffnung des Röstraums positionierbaren Brötchenaufsatz.

Brotröster oder "Toaster" sind seit langem bekannt. Sie dienen zum Toasten (Rösten) von Brotscheiben, die in der Regel von oben in die Öffnung des Röstraums eingesteckt und von allen Seiten gebräunt werden. Um den Toaster auch zum Aufbacken bzw. Aufwärmen von anderen Backwaren wie Brötchen, Croissants und dergleichen verwenden zu können, weisen viele Toaster inzwischen sogenannte Brötchenaufsätze auf, die als gekröpfte Auflagestäbe (DE 81 03 638 U1) oder als Backrost mit einer diesen überdeckenden Haube (DE 34 43 544 A1) ausgebildet sind.

Bei den bekannten Brotröstern anderer Art wird der Brötchenaufsatz beim normalen Brotröstbetrieb abgenommen und getrennt vom Brotröster aufbewahrt. Die Unterbringung des Brötchenaufsatzes stellt dabei oft ein Problem dar. Wenn er direkt neben dem Toaster steht, sieht es unordentlich aus. Wenn er an einem anderen Platz im Haushalt verstaut wird, besteht die Gefahr, dass er bei Bedarf nicht schnell genug zur Hand ist oder verlegt wird. Die in der Regel nach der Benutzung auf dem Brötchenaufsatz haftenden Brösel etc. können zu dem Ablageplatz mitgetragen werden. Wenn der Brötchenaufsatz wiederum an einem verstaubten Stellplatz aufbewahrt wird, wird er verunreinigt und dieser Staub kommt dann in Kontakt mit den aufzuwärmenden Backwaren, was aus hygienischen Gründen bedenklich ist.

Um diese Nachteile zu beseitigen, wird in der DE G 80 32 339 vorgeschlagen, dass der Brötchenaufsatz seitlich nach unten führende Arme aufweist, deren Abstand voneinander im Verhältnis zum Brotröstergehäuse so bemessen ist, dass das Brotröstergehäuse zwischen den Armen in den Brötchenaufsatz einschiebbar ist. Dies macht es möglich, den Brötchenröstaufsatz bei Nichtbenutzung auf die Unterseite des Gerätes aufzustecken, wo er dann als Standfuß für das Gerät dient und nicht auffällt. rätes untergebracht werden. Diese Art der Aufbewahrung des Brötchenröstaufsatzes ist daher für die tägliche Benutzung unhandlich und aufwendig. Außerdem ist die Verwendung des Brötchenaufsatzes als Standfläche immer noch nicht hygienisch. So weisen, wie oben erwähnt, die Roststäbe des Brötchenaufsatzes i d. R. Röstspuren auf. Diese Schmutzspuren gelangen dann auf die Unterseite des Gehäuses, und umgekehrt können Schmutzpartikel vom Abstellplatz an die aufzuwärmenden Backwaren getragen werden.

Es ist daher eine Aufgabe der vorliegenden Erfindung, einen Brotröster der eingangs genannten Art derart weiterzuentwickeln, dass die o. g. Probleme vermieden werden.

Diese Aufgabe wird dadurch gelöst, dass der Brotröster eine im Gehäuse angeordnete Aufnahmekammer zur Aufnahme des Brötchenaufsatzes aufweist, mit der Merkmalen des Anspruchs 1.

Dies macht es möglich, den Brötchenaufsatz bei Nichtbenutzung schnell, sauber und hygienisch im Gerät aufzubewahren, indem er nach der Verwendung einfach in die Aufnahmekammer eingeschoben wird. Ein Anheben des Geräts ist dabei nicht erforderlich. Dadurch, dass sich der Brötchenaufsatz in der Aufnahmekammer im Gerät befindet, ist er im nicht benutzten Zustand weitgehend vor Staub und Schmutz geschützt. Folglich werden die aufzuwärmenden Brötchen oder sonstigen Backwaren nicht beschmutzt und dadurch unappetitlich.

Die abhängigen Ansprüche enthalten besonders vorteilhafte Ausgestaltungen und Weiterbildungen der Erfindung.

Die Aufnahmekammer kann grundsätzlich an einer beliebigen Stelle im Gehäuse angeordnet sein. Bei einem besonders bevorzugten Ausführungsbeispiel ist jedoch die Aufnahmekammer des Brötchenaufsatzes unter dem Röstraum angeordnet. Bei diesem Aufbau ist das Gerät lediglich etwas höher als ein herkömmliches Gerät ausgebildet, was in der Regel für den Benutzer keine Rolle spielt. Die z. B. für die Unterbringung auf dem Esstisch wesentlichen Abmessungen der Stellfläche werden nicht vergrößert. Zusätzlich wird dadurch die Handhabung zur Aufbewahrung des Brötchenaufsatzes erleichtert, da der Brötchenaufsatz direkt in eine von einer Frontseite des Toasters gut zugängliche Öffnung in die Aufnahmekammer eingeschoben werden kann.

Bei einem besonders kostengünstigen Aufbau ist die Aufnahmekammer einfach offen. Um zu vermeiden, dass der abgelegte Brötchenaufsatz sichtbar ist, weist die Aufnahmekammer dagegen in einem weiteren Ausführungsbeispiel einen Deckel oder sonstigen Verschluss auf. Dies hat den weiteren Vorteil, dass kein Staub in die Aufnahmekammer eindringen kann.

Bei einer weiteren Variante weist die Aufnahmekammer eine Schublade auf. Diese Konstruktion ist zwar etwas aufwendiger, dafür ist jedoch die Bedienung komfortabler. Der Brötchenaufsatz kann einfach in die Schublade gelegt und diese dann mühelos in die Aufnahmekammer eingeschoben werden.

Bei einem weiteren bevorzugten Ausführungsbeispiel ist das Gehäuse zweiteilig ausgebildet, mit einem Röstraumteil, welches den Röstraum umfasst, und einem Aufnahmekammerteil, welches die Aufnahmekammer umfasst. Dies ermöglicht es insbesondere, das Röstraumteil und das Aufnahmekammerteil so auszubilden, dass die beiden Teile lösbar miteinander verbunden sind. Im Übrigen ist dann eine Nachrüstung bereits bestehender Modelle möglich. Zudem ergibt sich die Möglichkeit, das Gerät als zwei getrennte Einheiten anzubieten und damit marktgerecht aufzutreten, indem man den Kunden das Gerät auch ohne den Brötchenaufsatz und die Aufnahmekammer anbietet.

Bevorzugt ist der Brötchenaufsatz zusammenklappbar ausgebildet. Dadurch wird erreicht, dass die Aufnahmekammer besonders klein ausgebildet sein kann. Zum Beispiel kann der Brötchenaufsatz aus einem Tragrost zum Auflegen der Brötchen und daran schwenkbar angeordneten Ständerelementen bestehen. Diese Ausführung ermöglicht eine besonders einfache Herstellung.

Der Tragrost besteht vorzugsweise im Wesentlichen aus nur einem rechteckigen, flachen, in einer Röstebene, auf der die Brötchen aufgelegt werden, liegenden Rahmen aus stabförmigem Material. Auf die übliche Gitterstruktur des Tragrostes wird hierbei verzichtet. Insbesondere kann der Tragrost aus einem endlos umlaufenden Metalldraht realisiert werden. Diese Ausführung bietet trotz einfachen, materialsparenden Aufbaus hohe Stabilität in Kombination mit einer schlichten, für das Auge angenehmen Form. Die Ständerelemente sind dabei bei einer vorteilhaften Ausführung in Form von einzelnen Beinelementen ausgestaltet, welche vorzugsweise jeweils im Bereich der vier Ecken des rechteckigen Rahmens angeordnet sind. Die Verbindung zum Tragrost kann dabei dadurch erfolgen, dass die Beinelemente an ihren in einer Betriebsstellung oberen Enden jeweils eine runde Öse aufweisen, durch welche das stabförmige Material, beispielsweise der Draht, des Tragrostrahmens hindurchgeführt ist, sodass die Beinelemente in die Rostebene verschwenkt werden können.

Die Erfindung wird im Folgenden unter Hinweis auf die beigefügten Figuren anhand eines Ausführungsbeispiels noch einmal näher erläutert. Es stellen dar:
- Figur 1: eine perspektivische Darstellung eines Ausführungsbeispiels eines erfindungs- gemäßen Brotrösters 1, wobei der Brötchenaufsatz 8 sich in der Einsatzstellung befindet;
- Figur 2: eine perspektivische Darstellung des Brotrösters 1 gemäß Figur 1, wobei sich der Brötchenaufsatz 8 in einer Position beim Einschieben in die Aufnahme- kammer 2 befindet.

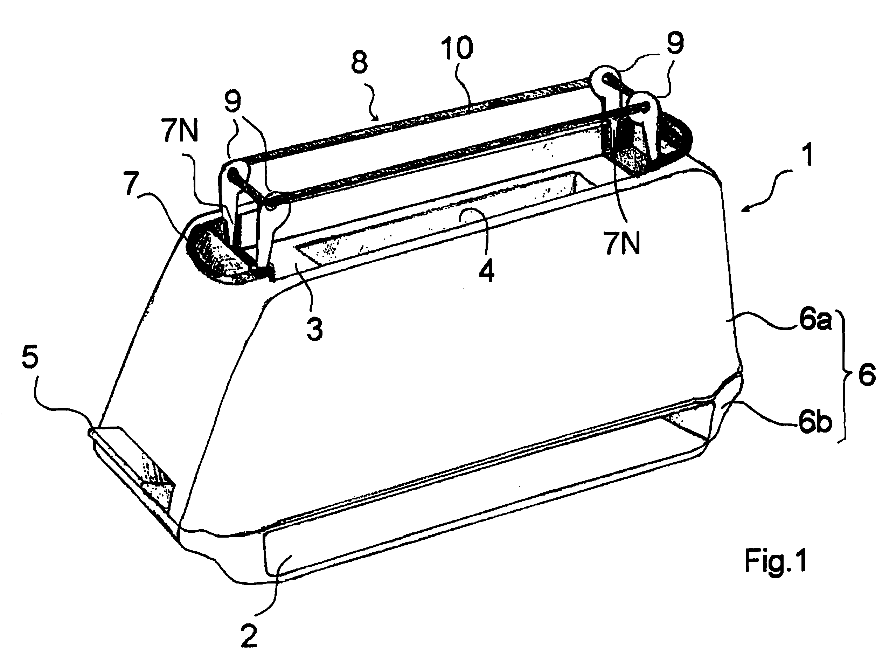

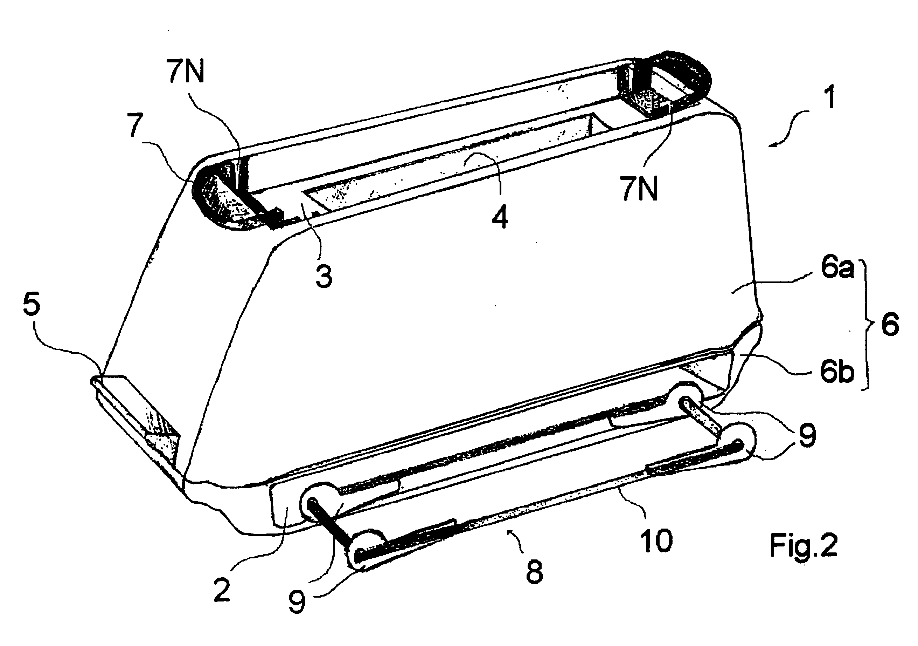

Der in den Figuren 1 und 2 dargestellte Brotröster 1 besitzt ein längliches Gehäuse 6, bestehend aus einem Röstraumteil 6a, in dem sich der Röstraum 4 befindet, und einem Aufnahmekammerteil 6b, in dem sich die Aufnahmekammer 2 für den Brötchenaufsatz 8 befindet. Die beiden Teile 6a und 6b sind hier fest miteinander verbunden. Sie können aber grundsätzlich auch als separate Teile aufgebaut sein, die lösbar miteinander verbunden sind.

Der Röstraum 4 ist in üblicher Weise nach oben geöffnet und weist eine sich in Längsrichtung des Toastergehäuses 6 erstreckende Röstraumöffnung 3 auf, in die die Brotscheiben zum Rösten eingesteckt werden. Mögliche Ausgestaltungen und technische Realisierungen des Röstraums 4 sind dem Fachmann bekannt und werden daher im Folgenden nicht näher beschrieben.

An den äußeren Wänden des Toastergehäuses 6 sind stirnseitig Traggriffe 5 aus wärmeisolierendem Material angeordnet, die einen sicheren Transport des Toasters 1 auch während des Betriebs oder kurz nach dem Betrieb ermöglichen.

In Figur 1 sieht man den Brötchenaufsatz 8 in seiner Betriebsstellung auf dem Toaster 1. Der Brötchenaufsatz 8 besteht aus einem Tragrost 10 und aus vier an den Ecken des Tragrosts 10 angeordneten Beinelementen 9. Der Tragrost 10 besteht hier aus einem einfachen, relativ dicken Metalldraht, welcher endlos umlaufend einen flachen, rechteckigen Rahmen bildet, auf den die Backwaren aufgelegt werden. Jedes der Beinelemente 9 weist an seinem oberen Ende eine an den Drahtdurchmesser angepasste Öse auf. Mittels dieser Öse ist das betreffende Beinelement 9 auf dem umlaufenden Draht des Tragrostes 10 schwenkbar gelagert.

An den beiden stirnseitigen Enden der länglichen Röstraumöffnung 3 befinden sich zwei jeweils identisch ausgebildete Halterungen 7 für die Beinelemente 9 des Brötchenaufsatzes 8. Jede der Halterungen 7 weist zwei im passenden Abstand zueinander angeordnete Einstecköffnungen 7N für die Beinelemente 9 auf. Durch eine in der Betriebsstellung nach unten konisch zulaufende Form der Beinelemente 9 und entsprechende konische Ausbildung der nutenartigen Einstecköffnungen 7N wird ein leichtes, selbst zentrierendes Einstecken der Beinelemente 9 in die Halterungen 7 gewährleistet. Die Abmessungen und die Form sowohl der Halterungen 7 bzw. der Einstecköffnungen 7N am Toastergehäuse 6 als auch der Beinelemente 9 am Brötchenaufsatz 8 sind so gewählt, dass der Tragrost 10 in der Betriebsstellung in der richtigen Höhe in einer waagerechten Ebene oberhalb der Öffnung 3 des Röstraums 4 stabil gehalten wird.

Nach der Nutzung kann der Brötchenaufsatz 8 mit wenigen Handgriffen aus der Halterung 7 genommen werden. Danach werden die vier Beinelemente 9 jeweils um 90° nach oben in die Rostebene bzw. parallel zum Tragrost 10 unter die Rostebene, in welcher sich der Tragrost 10 erstreckt, geschwenkt. In zusammengeklapptem Zustand kann er dann in die Aufnahmekammer 2 geschoben werden. Dies ist in Figur 2 dargestellt.

Dort kann der Brötchenaufsatz 8 bis zu seiner nächsten Verwendung verbleiben. Um den Brötchenaufsatz 8 wieder zu nutzen, kann der Brötchenaufsatz 8 ebenso schnell wieder aus der Aufnahmekammer 2 entnommen, mit wenigen Handgriffen aufgeklappt und auf die Röstraumöffnung 3 in die Einstecköffnungen 7N der Halterung 7 für den Brötchenaufsatz 8 gesteckt werden.

Die Aufnahmekammer 2 für den Brötchenaufsatz 8 ist bei dem in den Figuren 1 und 2 gezeigten Ausführungsbeispiel nur von einer Seite zugänglich. In einer weiteren nicht dargestellten Ausführungsform ist sie von zwei gegenüberliegenden Seiten zugänglich, d. h. die Kammer ist tunnelartig ausgebildet. Dies hat den Vorteil, dass der Brötchenaufsatz unabhängig von der Stellung des Toasters relativ zum Benutzer leicht aus der Kammer entnommen bzw. darin verstaut werden kann.

In einem nicht dargestellten Ausführungsbeispiel weist die Aufnahmekammer einen Deckel auf. Die Kammer und der darin enthaltene Brötchenaufsatz sind dann nicht mehr sichtbar, die Handhabe wird dadurch aber etwas umständlicher. Diese Variante hat jedoch den Vorteil, dass kein Staub in die Aufnahmekammer eindringen kann.

Bei einer weiteren nicht dargestellten Variante weist die Aufnahmekammer eine Schublade auf. Diese Konstruktion ist etwas aufwändiger, dafür ist jedoch die Bedienung komfortabler. Der Brötchenaufsatz kann einfach in die Schublade gelegt und diese dann mühelos in die Aufnahmekammer eingeschoben werden.

## Patentansprüche

1. Brotröster (1) mit einem in einem Gehäuse (6) angeordneten Röstraum (4) und einem über einer Öffnung des Röstraums (4) positionierbaren Brötchenaufsatz (8), **gekennzeichnet durch** eine im Gehäuse (6) unter dem Röstraum (4) angeordneten Aufnahmekammer (2) zur Aufnahme des Brötchenaufsatzes (8).

2. Brotröster nach Anspruch 1, **dadurch gekennzeichnet, dass** die Aufnahmekammer (2) eine verschließbare Öffnung aufweist.

3. Brotröster nach Anspruch 1 oder 2, **dadurch gekennzeichnet, dass** die Aufnahmekammer (2) eine Schublade umfasst.

4. Brotröster nach einem der Ansprüche 1 bis 3, **dadurch gekennzeichnet, dass** das Gehäuse (6) zweiteilig mit einem Rostraumteil (6a), welches den Röstraum (4) umfasst, und einem Aufnahmekammerteil (6b), welches die Aufnahmekammer (3) umfasst, ausgebildet ist.

5. Brotröster nach Anspruch 4, **dadurch gekennzeichnet, dass** das Röstraumteil (6a) und das Aufnahmekammerteil (6b) lösbar miteinander verbunden sind.

6. Brotröster nach einem oder mehreren der Ansprüche 1 bis 5, **dadurch gekennzeichnet, dass** der Brötchenaufsatz (8) in sich zusammenklappbar ausgebildet ist.

7. Brotröster nach Anspruch 6, **dadurch gekennzeichnet, dass** der Brötchenaufsatz (8) einen Tragrost (10) zum Auflegen der Brötchen und daran schwenkbar angeordnete Ständerelemente (9) umfasst.

8. Brotröster nach Anspruch 7, **dadurch gekennzeichnet, dass** der Tragrost (10) im Wesentlichen aus einem rechteckigen, flachen Rahmen aus stabförmigem Material gebildet ist.

9. Brotröster nach Anspruch 7 oder 8, **dadurch gekennzeichnet, dass** die Ständerelemente (9) einzelne Beinelemente (9) umfassen, die im Bereich von vier Ecken des Tragrostes (10) schwenkbar angeordnet sind.

## Claims

1. Bread toaster (1) with a toasting chamber (2) arranged in a housing (6) and a bread roll attachment (8) positionable over an opening of the toasting chamber (4), **characterised by** a receiving chamber (2), which is arranged in the housing (6) below the toasting chamber (4), for reception of the bread roll attachment (8).

2. Bread toaster according to claim 1, **characterised in that** the receiving chamber (2) has a closable opening.

3. Bread toaster according to claim 1 or 2, **characterised in that** the receiving chamber (2) comprises a drawer.

4. Bread toaster according to any one of claims 1 to 3, **characterised in that** the housing (6) is of two-part construction with a toasting chamber part (6a), which comprises the toasting chamber (4), and a receiving chamber part (6b), which comprises the receiving chamber (3).

5. Bread toaster according to claim 4, **characterised in that** the toasting chamber part (6a) and the receiving chamber part (6b) are detachably connected together.

6. Bread toaster according to one or more of claims 1 to 5, **characterised in that** the bread roll attachment (8) is of collapsible construction.

7. Bread toaster according to claim 6, **characterised in that** the bread roll attachment (8) comprises a support grill (10) for support of bread rolls and post elements (9) pivotably arranged thereat.

8. Bread toaster according to claim 7, **characterised in that** the support grill (10) is formed substantially from a rectangular flat frame of rod-shaped material.

9. Bread toaster according to claim 7 or 8, **characterised in that** the post elements (9) comprise individual leg elements (9) pivotably arranged in the region of four corners of the support grill (10).

## Revendications

1. Grille-pain (1) comprenant une chambre de grillage (4) située dans un boîtier (6) et un accessoire chauffe-petits pains (8) pouvant être positionné au-dessus d'une ouverture de la chambre de grillage (4), **caractérisé par** une chambre de réception (2) située dans le boîtier (6) sous la chambre de grillage (4) pour recevoir l'accessoire chauffe-petits pains (8).

2. Grille-pain selon la revendication 1, **caractérisé en ce que** la chambre de réception (2) comporte une ouverture pouvant être fermée.

3. Grille-pain selon la revendication 1 ou 2, **caractérisé en ce que** la chambre de réception (2) comprend un tiroir.

4. Grille-pain selon l'une des revendications 1 à 3, **caractérisé en ce que** le boîtier (6) est exécuté en deux parties, avec une partie de chambre de grillage (6a) qui comprend la chambre de grillage (4) et une partie de chambre de réception (6b) qui comprend la chambre de réception (3).

5. Grille-pain selon la revendication 4, **caractérisé en ce que** la partie de chambre de grillage (6a) et la partie de chambre de réception (6b) sont reliées l'une à l'autre de manière détachable.

6. Grille-pain selon l'une ou plusieurs des revendications 1 à 5, **caractérisé en ce que** l'accessoire chauffe-petits pains (8) est exécuté de manière escamotable en soi.

7. Grille-pain selon la revendication 6, **caractérisé en ce que** l'accessoire chauffe-petits pains (8) comprend une grille porteuse (10) pour poser les petits pains et des éléments de support (9) disposés sur celle-ci de manière pivotante.

8. Grille-pain selon la revendication 7, **caractérisé en ce que** la grille porteuse (10) est formée essentiellement d'un cadre plat rectangulaire formé d'un matériau en forme de barre.

9. Grille-pain selon la revendication 7 ou 8, **caractérisé en ce que** les éléments de support (9) comprennent des éléments de jambe individuels (9) qui sont disposés de manière pivotante dans la zone des quatre coins de la grille porteuse (10).
